# EUROPEAN PATENT APPLICATION

(11) **EP 3 858 484 A1**
(43) Date of publication of application: **04.08.2021**
(21) Application number: 20155259.3
(22) Date of filing: 03.02.2020
(51) Int. Cl.: B01L 3/00, G01N 30/38, B81C 1/00

(54) **ON-CHIP STRUCTURED SILICON-ON-INSULATOR VORTEX INDUCER**

(71) Applicant: Vrije Universiteit Brussel, 1050 Brussel (BE); Universiteit Twente, 7522 NB Enschede (NL)
(72) Inventor: DE MALSCHE, Wim, 2600 Berchem (BE); WESTERBEEK, Eiko, 7512 AN Enschede (NL); EIJKEL, Jan, 7522 JS Enschede (NL); OLTHUIS, Wouter, 7514 CL Enschede (NL)
(74) Representative: DenK iP bv

(57) **Abstract**

A fluidic device for processing a fluid or species therein is described. The device comprises a 3D channel comprising an inlet for receiving a sample fluid and an outlet for outputting the sample fluid. The channel is adapted for guiding flow of the sample fluid in an axial direction from the inlet to the outlet, the channel comprising at least two side walls. The device also comprises a controllable flow inducer comprising electrodes for inducing, when the sample fluid is flowing through the channel, a motion of the sample fluid in the channel in a plane substantially orthogonal to the axial direction. Along at least one of the side walls at least part of the electrodes are formed by alternatingly at least an electrically conducting portion, an electrically insulating portion and a further electrically conducting portion.

## Description

### Field of the invention

The invention relates to the field of fluidic processing, including but not limited to particle separation or particle production,... More specifically it relates to a system and a method for processing of a fluid or species therein in a fluidic channel using an on-chip silicon-on-insulator vortex inducer using electroosmosis.

### Background of the invention

High performance liquid chromatography (HPLC) is the most widespread and universal analytical separation technique, with applications in amongst others environmental monitoring, clinical diagnostics, food quality inspection, biological and pharmaceutical research. In a separation device, a separation of 2 components can be done by applying an axial pressure gradient through a medium with which the analytes interact differently, inducing different migration velocities. Axial bulk movement can also be induced using axial potential gradient, as shown in international patent application WO2017/009438. To accomplish advantageous mixing and to improve the separation efficiency, the gradient should occur in a direction perpendicular to the main flow. WO2017/009438 shows that using the concept of electroosmosis, the motion of liquid can be controlled by applying an electrical potential across it, e.g. an electrical modulating signal or an alternating current (AC), to induce a lateral electroosmotic flow.

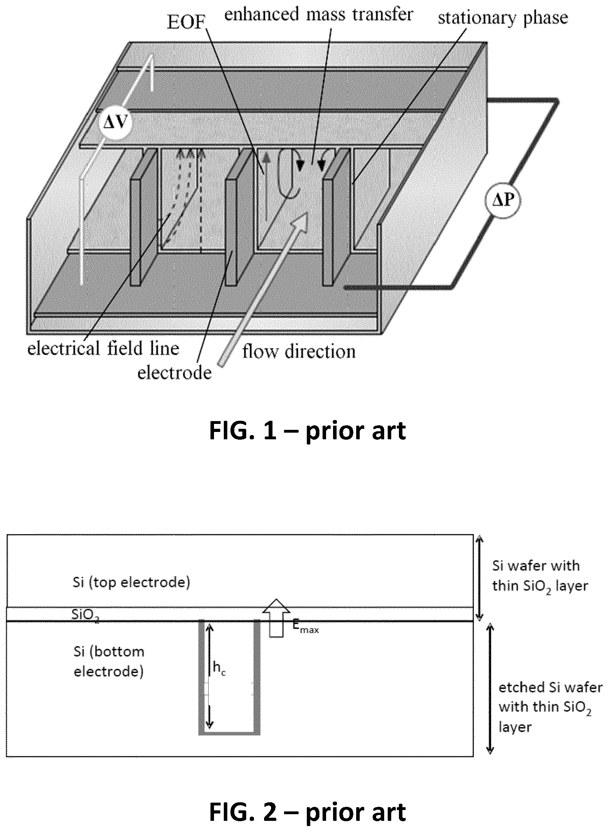

In WO2017/009438, the principle of lateral mixing is disclosed, together with the possible electrode configuration that could be appropriate to produce the desired mixing effect by AC actuation as shown in FIG. 1 and FIG. 2. In the disclosed electrode configuration, an insulating silicon oxide SiO2 layer is sandwiched between one top highly doped patterned silicon electrode and one bottom highly doped native silicon electrode. The potential difference is induced between the two silicon electrodes, while the oxide acts as an insulating layer to avoid short circuiting.

A disadvantage of the approach described in WO2017/009438 is that the channel is non-transparent, excluding the ability for on-chip observation and detection of compounds, control clogging, filling, and the like. Another disadvantage is that the main driving force for generating vortices, and the potential gradient, is at the top end of the channel, which limits the size of the vortices to the top end of the channel, and prevents having vortices or resulting in reduced lateral flow near the bottom end of the channel. This effect is especially disadvantageous with increased channel dimensions (i.e. aspect ratio AR, given by depth/width of the channel), while AR scaling is required for commercial products.

### Summary of the invention

It is an object of embodiments of the present invention to provide efficient system and device on-chip for processing of a fluid or species therein in a fluidic channel. Such processing may for example include separating, mixing, producing, manipulating, positioning, trapping etc.

It is an advantage of embodiments of the present invention that efficient mixing or separation can be done.

It is an advantage of embodiments of the present invention that a transparent substrate is used for observation and detection of compounds, control clogging, filing, (bio)particle trapping and separation, etc.

It is an advantage of embodiments of the present invention that the location where the maximum electrical field occurs can be chosen, thus allowing tuning of the vortices that are induced.

It is an advantage of embodiments of the present invention that for example in some embodiments a maximum electrical field can be induced close to the middle of the channel.

It is an advantage of embodiments of the present invention that the systems and methods allow to increase the reaction rates in the reactors for achieving separation of species. It thus is an advantage of embodiments of the present invention that systems and methods are provided allowing to improve separation. The latter can for example be applied in the field of life sciences, pharmacy, quality control, diagnostics,

It is an advantage of embodiments of the present invention that these provide good operation in flow applications benefiting from fast lateral transport. Aside from separation performance, it is advantageous for the separation throughput that fast lateral mixing occurs. Furthermore, embodiments of the present invention allow for the use of large channel dimensions, resulting in the fact that fouling becomes less probable.

It is an advantage of embodiments of the present invention that they can be applied in preparative and analytical separation systems, reactors or diagnostic systems wherein samples need to be transported.

It is an advantage of embodiments of the present invention that they can be applied in reactors wherein synthesis takes place, wherein narrow residence time distributions are required for the production of pure product, or uniform species. It is an advantage of embodiments of the present invention that these can be advantageously applied for enhancing the production speed, and hence the batch volume produced in a given time, during the production of e.g. drug loaded species for sustained release.

It is an advantage of embodiments of the present invention that an alternating current (AC) electro kinetics can be used to generate vortices in the fluidic channel.

It is an advantage of embodiments of the present invention that an insulating silicon oxide SiO2 layer is placed at the center of the channel between two silicon electrode layers.

It is an advantage of embodiments of the present invention that said configuration provides a vortex located at the center of the channel.

It is an advantage of embodiments of the present invention that said configuration can be cascaded (i.e. repeated).

It is an advantage of embodiments of the present invention that said configuration allow to tailor vortex organization in the fluidic channels.

It is an advantage of embodiments of the present invention that multiple fluidic channels can be used to enhance the liquid volume in the inlet and in the outlet.

It is an advantage of embodiments of the present invention that said multiple fluidic channels can act as support structures (pillars) for silicon electrodes.

The above objective and optionally one or more of the advantages is accomplished by a method and a device according to the present invention.

In a first aspect, the present invention relates to a fluidic device for processing a fluid or species therein, the device comprising
a 3D channel comprising an inlet for receiving a sample fluid and an outlet for outputting the sample fluid, the channel being adapted for guiding flow of the sample fluid in an axial direction from the inlet to the outlet, the channel comprising at least two side walls,
a controllable flow inducer comprising electrodes for inducing, when the sample fluid is flowing through the channel, a motion of the sample fluid in the channel in a plane substantially orthogonal to the axial direction,
characterised in that along at least one of the side walls at least part of said electrodes are formed by alternatingly at least an electrically conducting portion, an electrically insulating portion and a further electrically conducting portion.

The sample fluid may be a sample liquid.

The channel may be formed in a multi-layered substrate and the at least an electrically conducting portion, said electrically insulating portion and said further electrically conducting portion may be formed respectively by an electrically conducting, an electrically insulating and electrically conducting layer of the multi-layered substrate. It is an advantage of embodiments of the present invention that easy manufacturing of the device can be obtained, by using a multi-layered substrate.

An upper and a bottom portion of the side walls may be formed in an electrode layer of the multi-layered substrate and at least one intermediate portion of the side walls may be formed in an insulating layer of the multi-layered substrate.

For each of the side walls of the channel there may be alternatingly at least an electrically conducting portion, an electrically insulating portion and a further electrically conducting portion.

The electrically conducting portions in the side walls may be symmetric with respect to a symmetry axis in the channel. It is an advantage of embodiments of the present invention that the electrically conducting portions in both side walls can be made using the same processing steps, thus allowing efficient manufacturing.

There may be a plurality of alternating electrode and insulating portions along each of the side walls. It is an advantage of embodiments of the present invention that a high electric field can be obtained at different positions along the height of the channel, thus allowing to induce different vortices.

The sidewalls of the channel may be covered by a thin electrically insulating layer. The channel may furthermore comprise a top wall. It is an advantage of embodiments of the present invention that the channel may be a closed channel.

The top wall of the channel may be formed by a transparent material. It is an advantage of embodiments of the present invention that the top wall may be made of a transparent material, e.g. a transparent substrate, allowing for example observation and detection of compounds, control of clogging or fouling, control of filing, optical detection of certain properties, etc.

The device may comprise a plurality of channels, wherein for each channel, the channel comprises along at least one of its side walls, alternatingly at least an electrically conducting portion, an electrically insulating portion and a further electrically conducting portion formed respectively by an electrically conducting, an electrically insulating and electrically conducting layer of the multi-layered substrate.

The plurality of channels may be construed by the use of pillars positioned inside one channel, generating subchannels, or the plurality of channels may be construed by creating a plurality of channels in the substrate. The plurality of channels may form an array of channels.

In one, or if present, more of the channels a plurality of pillars may be present.

The electrode configuration may provide an electric field distribution having a maximum substantially at half of the depth of the channel.

The present invention in one aspect also relates to a fluidic system comprising a fluidic device as described above, the fluidic system being any of a mixing system, a separation system, a chemical production system or a biotechnological production system.

The fluidic system may be an on-chip system.

The present invention also relates to the use of a fluidic device as described above or a fluidic system as described above for processing a fluid or species therein a fluid in a fluid flow in any of the process of separating components in a flow, in the process of production of chemical components, in the process of analysing components in a flow or in the process of production of biotechnological components.

The present invention also relates to a method for manufacturing a device as described above, the method comprising
obtaining a multi-layered substrate, the multi-layered substrate comprising at least an electrically conducting layer, an electrically insulating layer and an electrically conducting layer, and
creating, e.g. etching, a channel into said multi-layered substrate, so as to form a 3D channel with side walls whereby along at least one of the side walls electrodes are formed by alternatingly at least an electrically conducting portion, an electrically insulating portion and a further electrically conducting portion.

Particular and preferred aspects of the invention are set out in the accompanying independent and dependent claims. Features from the dependent claims may be combined with features of the independent claims and with features of other dependent claims as appropriate and not merely as explicitly set out in the claims. These and other aspects of the invention will be apparent from and elucidated with reference to the embodiment(s) described hereinafter.

### Brief description of the drawings

FIG. 1 - prior art and FIG. 2 - prior art illustrate the principle of inducing a mixing of the fluid in a channel as known from prior art.
FIG. 3 illustrates an fluidic device according to an embodiment of the present invention for inducing improved mixing.
FIG. 4a and 4b illustrate a comparison of the induced electric field for a fluidic device according to prior art and according to the present invention.
FIG. 5 and FIG. 6 illustrate particular examples of fluidic devices according to embodiments of the present invention.
FIG. 7 to FIG. 20 illustrate different steps of a manufacturing method of an fluidic device according to an embodiment of the present invention.
FIG. 21 illustrates a flow chart of a manufacturing method of a fluidic device according to an embodiment of the present invention.
FIG. 22 illustrates an improved reduction of dispersion, as can be obtained using fluidic devices according to embodiments of the present invention.

The drawings are only schematic and are non-limiting. In the drawings, the size of some of the elements may be exaggerated and not drawn on scale for illustrative purposes.

Any reference signs in the claims shall not be construed as limiting the scope.

In the different drawings, the same reference signs refer to the same or analogous elements.

### Detailed description of illustrative embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.
Furthermore, the terms first, second and the like in the description and in the claims, are used for distinguishing between similar elements and not necessarily for describing a sequence, either temporally, spatially, in ranking or in any other manner. It is to be understood that the terms so used are interchangeable under appropriate circumstances and that the embodiments of the invention described herein are capable of operation in other sequences than described or illustrated herein.
Moreover, the terms top, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

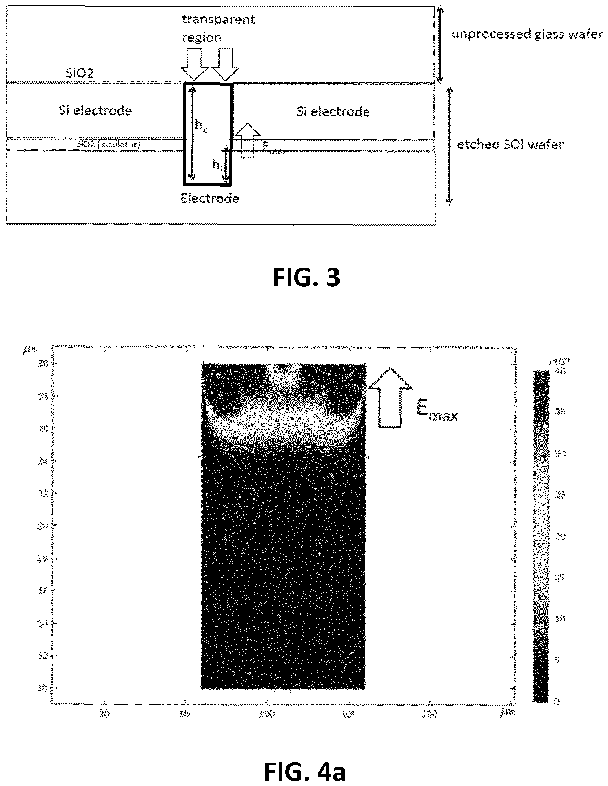

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.
Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.
Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.
Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.
In the description provided herein, numerous specific details are set forth. However, it is understood that embodiments of the invention may be practiced without these specific details. In other instances, well-known methods, structures and techniques have not been shown in detail in order not to obscure an understanding of this description.
Where in embodiments of the present invention reference is made to a fluidic device, reference may be made to a microfluidic or nanofluidic device, wherein the channels wherein a fluid is transferred within a substrate comprise at least one dimension in the micrometer range (1µm to 1000µm) or in the nanometer range (10nm to 1µm).
Where in embodiments of the present invention reference is made to species, reference is made particles, constituents, molecules, or the like. In a first aspect, the present invention relates to a device wherein processing a fluid or species therein, e.g. mixing of a fluid, can be applied. The fluidic device may be part of a fluidic system, such as for example a separation system, a chemical component production reactor, a biotechnological component production reactor, etc.
According to embodiments of the present invention, the device comprises a 3D channel comprising an inlet for receiving a sample fluid and an outlet for outputting the sample fluid. The channel is adapted for guiding flow of the sample fluid in an axial direction from the inlet to the outlet. The axial direction may correspond to a mean flow path or central flow path through the channel when a fluid is injected under pressure into the inlet and allowed to flow out of the outlet. The channel comprises at least two side walls. If the channel is a closed channel, also a top wall will be present. Furthermore, depending on the shape of the channel, a bottom wall or an edge (e.g. in case of a V-shaped channel) also may be present.
The fluidic device also comprises a controllable flow inducer comprising electrodes for inducing, when the sample fluid is flowing through the channel, a motion of the sample fluid in the channel in a plane substantially orthogonal to the axial direction. With controllably inducing a flow, there is meant that the flow inducer can be either activated to induce the particular flow, or can be de-activated in order not to induce the particular flow. The flow inducer may be a vortex flow inducer for generating a vortex flow. This motion is a motion in a plane substantially orthogonal to the axial direction, e.g. while in operation the sample fluid is flowing through the channel. Thus, the motion may refer to a non-axial motion, e.g. the motion may comprise, or consist of, a motion in a direction substantially orthogonal to the axial direction. Substantially orthogonal may refer to an angle of at least 45° with respect to the axial direction, but preferably an angle of at least 60°, or even at least 75°, such as 80°, or at least 85°. For example, substantially orthogonal may refer to a direction of motion at an angle with respect to the axial direction in the range of 85° to 95°, such as in the range of 87° to 93°, e.g. orthogonal to the axial direction. The flow inducer may be adapted for processing a fluid or species therein, e.g. inducing a flow in the sample fluid in a lateral direction, e.g. a non-axial direction, e.g. a direction substantially orthogonal to the axial direction. This flow inducing advantageously can reduce axial dispersion. The latter is obtained not only at the top part of the channel but rather throughout the full depth of the channel since along at least one of the side walls at least part of said electrodes are formed by alternatingly at least an electrically conducting portion, an electrically insulating portion and a further electrically conducting portion.
It is an advantage of embodiments of the present invention that dispersion in a chromatographic column can be efficiently reduced, not only in an upper region of the channel, but throughout the channel. When a sample band moves through a fluidic device, it becomes wider. This can limit the efficiency of the processing of the sample, e.g. the efficiency of separation in separation devices, the efficiency of production of components in production reactors, etc.. An important cause for this broadening is the slow mass transfer between different velocity lines of the parabolic flow profile that is present in the channel. This dispersive effect can thus be reduced by enhancing the mass transport between the flow lines throughout the depth of the channel, in accordance with embodiments of the present invention. For example, a local flow that is substantially perpendicular to the global flow direction from the inlet to the outlet of the channel can be achieved in accordance with embodiments of the present invention. Advantageously, according to embodiments of the present invention, such local flow can be induced throughout the depth of the channel, so that a good flow is obtained for the full sample and not only for the sample in the upper part of the channel, as compared to the device described in WO2017/009438.
By way of illustration, embodiments of the present invention not being limited thereto, further features and advantages will be illustrated with reference to drawings FIG. 3 to FIG. 4b.
FIG. 3 illustrates a general overview of a fluidic device according to an exemplary embodiment of the present invention. The fluidic device comprises a channel, e.g. at least one channel, e.g. a plurality of channels. The channel comprises an inlet for receiving a sample fluid and an outlet. For example, the channel may be a microfluidic channel. For example, the channel may have a cross-sectional area, e.g. a cross-section in a plane orthogonal to the axial direction, of less than 100,000 µ 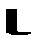 m2, e.g. of less than 50,000 µ 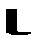 m2, e.g. in the range of 100 µ 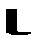 m2 to 20,000 µ 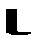 m2, e.g. in the range of 1,000 µ 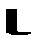 m2 to 15,000 µ 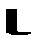 m2, such as about 12,500 µ 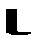 m2. It is to be noted that such small channels typically require a flow inducer specifically adapted for use in such micro-scale system.
The channel may in some embodiments be adapted for separating the sample fluid into components when the sample fluid flows through the channel in an axial direction from the inlet to the outlet. For example, the channel may comprise a stationary phase, such that molecules in the sample fluid can be discriminated based on their affinity for the stationary phase. For example, the stationary phase can be integrated in at least one channel wall and/or may comprise species and/or support pillars in the channel. For example, the channel may comprise a plurality of adsorbent elements for inducing a mass transfer separation of the sample fluid when the sample fluid is flowing through the channel. Such a plurality of adsorbent elements may for example comprise an array of pillar structures. Nevertheless, embodiments are not limited thereto and the channel may for example also be used as part of a reactor wherein one or more chemical or biotechnological components are made. The walls of the channel may be non-porous or porous. In one embodiment, the channel may comprise an array of pillar structures in the channel and these may comprise porous or non-porous pillar structures. It is an advantage of porous structures that a good specific surface for analyte-stationary phase interactions can be formed by such structures. Porous layers may be integrated into the channel walls and/or into pillar structures by, for example, anodization and/or sol-gel deposition.
The fluidic device according to embodiments of the present invention comprises a flow inducer for inducing a motion of the sample fluid in a plane substantially orthogonal to the axial direction A. The flow inducer comprises electric field generating means for inducing the motion of the sample fluid. The motion may for example be a motion due to an electro-osmotic flow (EOF).
The flow inducer is adapted for generating an electric field E, such that a tangential component of the electrical field lines at the support structures give rise to an EOF, in a direction substantially orthogonal to the axial direction, e.g. driven by capacity induced charges. It is an advantage of an electro-osmotic flow generating flow inducer that the motion may be generated efficiently over a small distance, e.g. in a channel having a cross-section, e.g. in a direction orthogonal to the axial direction, of less than 20,000 µ 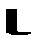 η2. The flow inducer may be adapted for inducing a movement of at least one component in the sample fluid, when in the channel, in a non-axial direction. The non-axial direction may refer to a direction substantially different from the axial direction A, e.g. a direction forming an angle of at least 30° with the axial direction, e.g. a direction at an angle of at least 45° or at least 60° with respect to the axial direction A. Preferably, the non-axial direction is substantially orthogonal to the axial direction, e.g. at an angle in the range of 80° to 100°, e.g. in the range of 85° to 95°. This flow inducer may for example be adapted for inducing a non-axial force on analytes in the fluid when in the channel, or for inducing a non-axial movement of a carrier fluid in the sample fluid when in the channel. Thus, this non-axial force may have a mixing effect with respect to different velocities of analytes at substantially the same axial position. Thus, a smaller distribution in velocities in an axial cross- section of the channel, and therefore a lower dispersion, can be achieved in accordance with embodiments of the present invention. The flow inducer may be adapted for inducing a continuous and/or oscillating non-axial movement of the sample fluid, e.g. of the carrier fluid and/or of analytes in the sample fluid. The flow inducer may be adapted for inducing a lateral electroosmotic flow between support structures in the channel.
According to embodiments of the present invention, the flow inducer comprises a plurality of electrodes arranged in or on the channel. This plurality of electrodes may be adapted for generating an electric field E suitable for inducing the motion by acting on charged and/or polarizable constituents of the sample fluid. Different electrodes are positioned along different positions along the height of the channel, so that an electrical potential is induced along the height of the channel, not only at the top of the channel.
The flow inducer comprises a plurality of electrodes for generating an electric field E. The electrodes and the microstructures may be arranged such that lateral vortices in the fluid flow through the channel are created by electro-osmosis. Thus, in embodiments of the present invention, local mass transfer can be advantageously improved in an anisotropic fashion. Particularly, an ordered array of fluid flow vortices may be generated by electro-osmosis. The tangential component of the electrical field E at the support structures may give rise to a vertical electro-osmotic flow, for example driven by capacity induced charges. As the EOF pumping only occurs at the vertical surfaces, a returning flow is created, to satisfy mass conservation, completing the motion path, e.g. thus creating a local flow, e.g. a local vortex flow.
The device may comprise an electrical insulator for electrically insulating the plurality of electrodes from the sample fluid, when the sample fluid is contained in the channel. Thus, direct electrical contact may be avoided with the sample fluid. It is an advantage of embodiments of the present invention that electrochemical degradation can be reduced or even avoided.
For example the electrodes, may be covered by an insulating layer of silicon dioxide, e.g. having a thickness in the range of 10 nm to 100 nm, e.g. in the range of 20 nm to 50 nm, for example a thickness of 30 nm. The insulating layer may be a conformal layer of Si02 . For example, the conformal nature of thermally deposited Si02 may reduce the risk for electrochemical decomposition of the underlying electrode material, e.g. doped silicon or ITO, at least when operated below the breakthrough field strength, since there will be no physical contact with the mobile phase.
The electric field E may be generated by a capacitive coupling of the plurality of electrodes. It is an advantage of embodiments of the present invention that no permanent charges may be left on the walls.
The lateral flow motion may thus be generated by an oscillating electroosmotic flow (EOF), which is induced capacitively. The plurality of electrodes may comprise at least a first electrode and at least a second electrode, for connecting to two corresponding power supply terminals of a power supply. The first and second electrode may be arranged such that a small gap exists between the first electrode and the second electrode. For example, the closest distance between any point on the first electrode and any point on the second electrode may be less than or equal to 500 µ 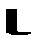 η, for example in the range of 1 µ 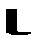 η to 200 µ 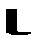 η, e.g. in the range of 5 µ 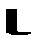 η to 100 µ 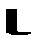 η, such as in the range of 10 µ 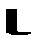 η to 50 µ 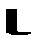 η, e.g. in the range of 1 µ 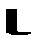 η to 25 µ 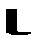 η. Due to such small gap distance, no permanent charges may be required, which may be considered a bottleneck of classical capillary electrochromatography (CEC). For example, in CEC, an axial voltage gradient is imposed over a length of a few cm to tens of cm, e.g. over a length in the range of 1 cm to 100 cm.
The device may also comprise a power supply for providing an electric potential difference AV over the plurality of electrodes. This power supply may be adapted for generating an alternating electric potential difference, e.g. for generating an alternating current (AC) driving the electric potential difference, over the plurality of electrodes.
The device may also comprise a cooling element, e.g. a Peltier cooling element, for compensating for the heat supplied by operating the electrodes, e.g. by supplying an alternating current (AC) power supply to the electrodes. For example, the cooling element may have a cooling power in the range of 0.1 W to 100 W, e.g. in a range of 1 W to 50 W, for example 10 W, 20 W, 30 W or 40 W. For example, when 1 V is applied over a 25 µ 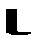 η channel height, e.g. the exemplary channel being 500 µ 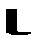 η wide by 5 cm long by 25 µ 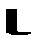 η high, and the channel is filled with a typical HPLC buffer, 10 mW to 100 mW may be produced. Note that the flow lateral mixing in a device in accordance with embodiments of the present invention may advantageously also reduce or prevent, e.g. may suppress, temperature gradients.
The device according to embodiments of the present invention may also comprise a pump assembly for generating a pressure gradient ΔP in the channel along the axial direction. The pump assembly may comprise a conventional pump, e.g. a membrane pump. The pump assembly may also comprise an electro-osmotic pump. The pump assembly may be at least partially contained in the channel. The pump assembly 4 may comprise a pump operationally coupled to the inlet such as to generate a pressure in the sample fluid at the inlet that is higher than a pressure in the sample fluid at the outlet.

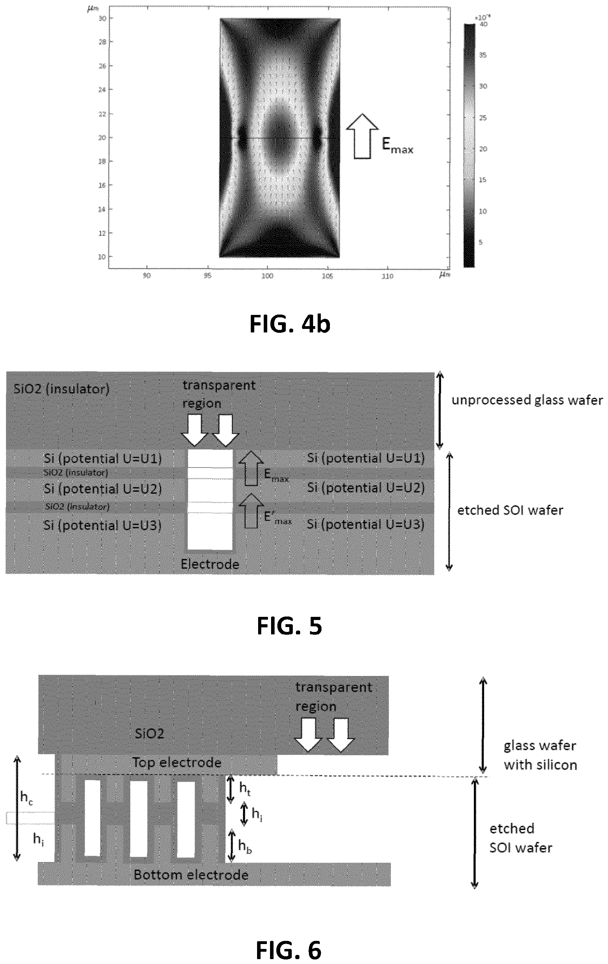

FIG. 4a and 4b illustrate the driving force for lateral electroosmotic flow for a device according to prior art (FIG. 4a) and a device according to an embodiment of the present invention. It can be seen that a far more optimal driving force for lateral electroosmotic flow is obtained in embodiments of the present invention.
In one embodiment, the present invention provides a device wherein a plurality of electrodes are provided such that at different positions along the channel height additional fields can be applied. In the example shown in FIG. 5, three electrodes are introduced along the cell height, allowing to create two different electrical fields, being Eₘₐₓ and E'ₘₐₓ, by setting the different electrodes at three different potentials U1, U2 and U3. In the present example, the top layer is made of a transparent material. More generally, instead of a single, also multiple insulating layers can be provided between multiple electrodes that can be operated at electrical potentials according to desire. This allows to maintain large lateral flows which is of generic relevance for enhanced mass transfer (e.g. chromatography, catalytic reactor, etc.). Such advanced electrode configurations also allow to tailor vortex organization in channels. More advanced vortex can be used to realize novel particle separation methodologies or optimal reactor configurations.
In yet another embodiment, the present invention provides a device wherein the flow induced by the different fields is induced between different sub-channels formed by pillar structures. The pillar structures then act as sub-channel walls where the same principle is applied as indicated above. Corresponding electrodes of the different pillars may be wired separately, but advantageously make use of a same common electrode, in FIG. 6 illustrated by the top electrode and the bottom electrode. In general, such embodiments provide for the possibility for processing larger volumes and/or the availability of larger surfaces. To this end, sub-channels or pillars are incorporated, where the problem arises that for the SOI approach depicted in Fig. 3 the pillars would be electrically floating and not connected to an electrode. To address this, the configuration in Fig 6 is proposed. A quartz (or other SiO2 based) wafer with a thin Si layer (e.g. by LPCVD deposition of amorphous Si) can be bonded (possibly after polishing) to a patterned SOI wafer. It can be desirable to provide optically transparent regions by removing the top silicon layer at certain observation regions

In a second aspect, the present invention relates to a fluidic system comprising a fluidic device according to the first aspect. The fluidic system thereby is any of a mixing system, a separation system, a chemical production system or a biotechnological production system. It may be in some embodiments an on-chip system. The fluidic system may comprise other common features as known in the art, such as heating elements for controlling the temperature of the fluid in the channel, and/or a controller for controlling a pump assembly, an actuator and/or other components of a production reactor or separation system. The system also may comprise a data storage device and/or a data processing device for storing and/or processing a signal provided by analysis devices present in the system.
Further features and advantages may be as expressed in the first aspect. In some embodiments, the system corresponds with a chromatographic column assembly. In such a chromatographic column assembly, the channel is adapted for separating the sample fluid into components, e.g. for generating at least two fractions having different relative compositions, when the sample fluid flows through the channel in an axial direction from the inlet to the outlet. In some embodiments, general components may be as described for example in WO2017/009438.

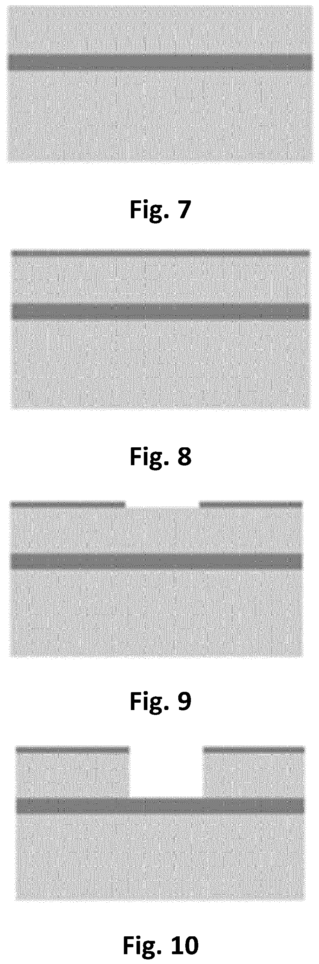

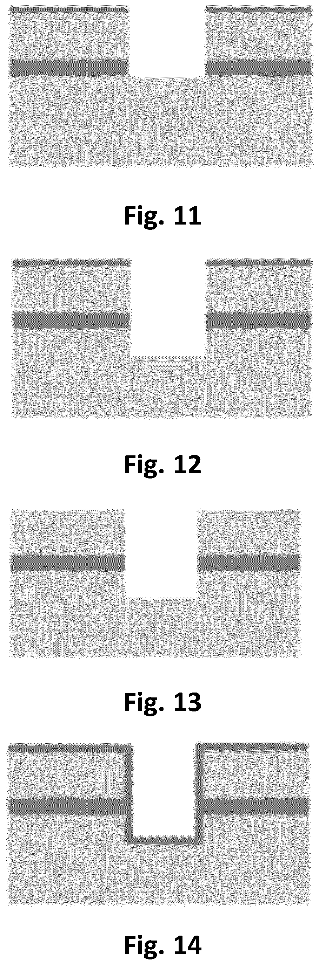

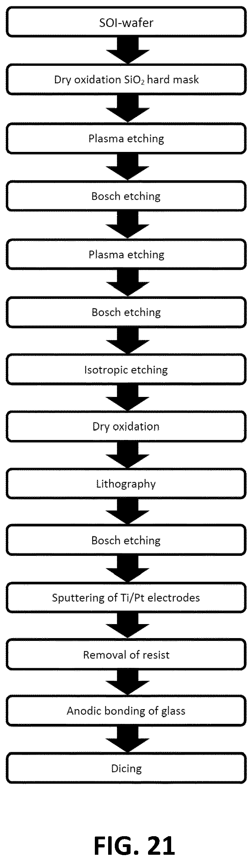

In yet another aspect, the present invention relates to a method for manufacturing a device according to the first aspect. According to embodiments of the present invention, the method comprises obtaining a multi-layered substrate, the multi-layered substrate comprising at least an electrically conducting layer, an electrically insulating layer and an electrically conducting layer. The method also comprises creating a channel into said multi-layered substrate, so as to form a 3D channel with side walls whereby along at least one of the side walls electrodes are formed by alternatingly at least an electrically conducting portion, an electrically insulating portion and a further electrically conducting portion. It is an advantage of embodiments of the present invention that well known manufacturing techniques may be applied.
By way of illustration, embodiments of the present invention not being limited thereto, an example of a method of manufacturing a device according to the first aspect is described below. FIG. 21 shows a flowchart of said method in accordance with embodiments of the present invention. The method comprises 14 steps illustrated in FIG. 7 to FIG. 20.
In a first step, a silicon-on-insulator wafer comprising a highly doped silicon layer on top of a silicon oxide layer on top of a highly doped silicon substrate layer is prepared, e.g. as shown in FIG. 7. It is to be noted that the materials used are given by way of illustration only and that other semiconductor materials or more generally other type of materials with similar electrical conductivity properties can be equally applied.
In a second step, a silicon oxide layer is deposited on top of the silicon-on-insulator wafer, said silicon oxide layer is to be used as a hard mask, e.g. as shown in FIG. 8.
In a third step, said hard mask is patterned using a photoresist layer in a photolithography process, said hard mask is then etched, for example using a plasma etching process, e.g. as shown in Fig. 9.
In a fourth step, the top highly doped silicon layer is etched in a deep reactive-ion etching process (DRIE), e.g. as shown in Fig. 10.
In a fifth step. the underlying silicon oxide layer is etched in a plasma etching process, e.g. as shown in Fig. 11.

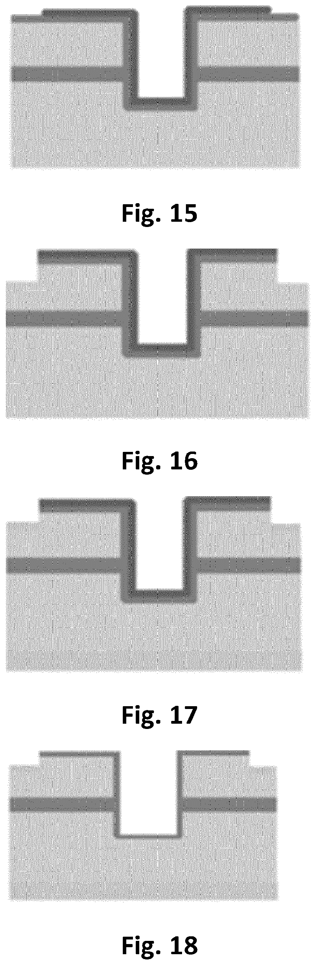

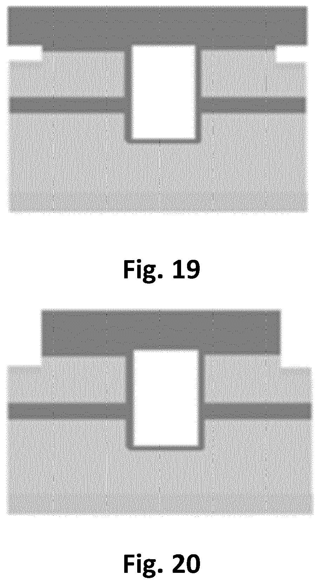

In a sixth step, the underlying highly doped silicon substrate layer is etched in a deep reactive-ion etching process (DRIE), e.g. as shown in Fig. 12.
In a seventh step, the silicon oxide hard mask is removed in an isotropic HF etching process, e.g. as shown in FIG. 13.
In an eighth step, a thin silicon oxide layer is thermally grown on the wafer, to prevent the analyte from reacting electrochemically with the highly doped silicon electrodes, e.g. as shown in FIG. 14.
In a ninth step, a mask comprising photoresist is patterned in a photolithography process, said mask is to be used for etching the top silicon oxide layer on the side and the underlying highly doped silicon on the side, e.g. as shown in Fig. 15.
In a tenth step, the silicon oxide on the side is etched in a plasma etching process, and the underlying highly doped silicon on the side is partially etched in a deep reactive-ion etching process, e.g. as shown in FIG. 16.
In an eleventh step, a layer of Titanium and a layer of Platinum are deposited on the wafer, to prepare for an electrical connection between the upper highly doped silicon layer to be used as an electrode to e.g. an AC source, and to prepare for an electrical connection between the lower highly doped silicon layer to be used as an electrode to e.g. an AC source, e.g. as shown in FIG. 17.
In a twelfth step, the mask comprising a photoresist is etched away, e.g. as shown in FIG. 18.
In a thirteenth step, a glass wafer is anodically bonded to the silicon-on-insulator wafer, e.g. as shown in FIG. 19.
In a fourteenth step, the silicon-on-insulator wafer is diced, e.g. as shown in FIG. 20.
It will be understood that although the method has been illustrated as manufacturing starting from a silicon-on-insulator sample or chip, comprising of at least one highly doped silicon layer (herebelow referred to as silicon electrode) and at least one insulating silicon oxide SiO2 layer (herebelow referred to as silicon oxide), embodiments are not limited thetero and other substrates, other types of conducting material and other types of insulating material also may be used.

In yet another aspect, the present invention relates to a method for processing, e.g. separating, a sample fluid. The method comprises the steps of inserting a sample fluid in the inlet of a fluidic channel, and extracting a sample fluid from the outlet. The method further may use one of both of a pressure gradient and a potential gradient to generate the flow in the channel in the axial direction.
The method further comprises induceing a potential gradient to create a motion of the sample fluid e.g. a vortex flow. According to embodiments of the present invention, the electric field is applied such that a potential field is present not only at the top of the channel but also at other positions along the height of the channel.
Inducing the flow thus comprises generating an electric field that induces this motion by acting on charged and/or polarizable constituents of the sample fluid. Furthermore, generating the electric field may comprise generating the electric field via a capacitive coupling of a plurality of electrodes over the sample fluid, in which the sample fluid is electrically insulated from the plurality of electrodes. Inducing the flow may comprise supplying an alternating voltage to the plurality of electrodes. Supplying an alternating voltage to the plurality of electrodes may comprise supplying this alternating voltage having an AC frequency in the range of 50% to 200% of the characteristic time of the RC circuit formed by the electrodes and the sample fluid. For example, the frequency may be selected from a range of 75% to 150% of this characteristic RC-time. For example, the frequency may be selected from a range of 90% to 110% of this characteristic RC-time. For example, the AC frequency may be equal to about the RC-time of the electrode/solution system.
Further features of a method in accordance with embodiments of the present invention shall be clear from the description hereinabove relating to embodiments of the first and second aspect of the present invention.
In a method according to embodiments of the present invention, an increased mass transfer rate between the support structures of chromatographic columns may be achieved, such that also a performance increase can be attained. This enhanced transport may be mediated by electro-osmotic flow, oriented perpendicular to the axial flow direction, e.g. an axial, pressure-mediated flow. The latter is obtained throughout the height of the channel.
The method advantageously may be performed using a device or system as described in one of the above aspects.

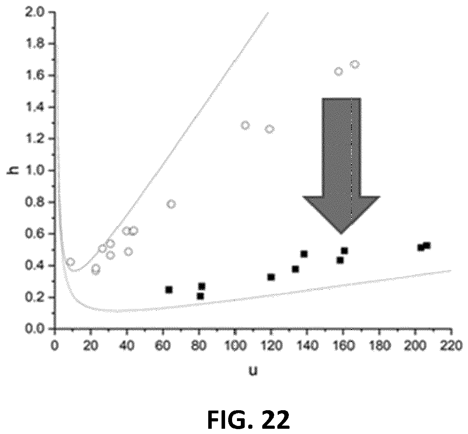

Further by way of illustration, the effect of implementing electrical field generation at a position along the channel height different from the top is shown in FIG. 22. It illustrates that the dispersion can be significantly reduced by applying an electrical field. It shows the impact of induced vertical vortex flow obtaining in a channel with 40 µm x 40 µm, resulting in a reduction on dispersion (experimental : data points, simulation : full lines). It may be considered surprising that processing such as mixing or even vortex mixing can be effective in minimizing dispersion. For example, chaotic eddies are generated in mixers, thus creating turbulent flow, exactly to enhance dispersion and mixing. However, when these non-linear flows are oriented substantially perpendicular to the general flow direction, these dispersive effects can in fact be exploited to counter dispersion in the axial direction, which will eventually determine the analyte band width and concomitantly also the efficiency of the processing of the sample.
Illustrative examples are provided herein to demonstrate principles and advantages of embodiments according to the present invention. These examples are not intended to be limiting to the invention in any way, but merely provided to assist the skilled person in reducing embodiments of the present invention to practice.

## Claims

1. A fluidic device for processing a fluid or species therein, the device comprising
- a 3D channel comprising an inlet for receiving a sample fluid and an outlet for outputting the sample fluid, the channel being adapted for guiding flow of the sample fluid in an axial direction from the inlet to the outlet, the channel comprising at least two side walls,
- a controllable flow inducer comprising electrodes for inducing, when the sample fluid is flowing through the channel, a motion of the sample fluid in the channel in a plane substantially orthogonal to the axial direction,
**characterised in that** along at least one of the side walls at least part of said electrodes are formed by alternatingly at least an electrically conducting portion, an electrically insulating portion and a further electrically conducting portion.

2. A fluidic device according to claim 1, wherein the channel is formed in a multi-layered substrate, and wherein said at least an electrically conducting portion, said electrically insulating portion and said further electrically conducting portion are formed respectively by an electrically conducting, an electrically insulating and electrically conducting layer of the multi-layered substrate.

3. A fluidic device according to any of the previous claims, wherein an upper and a bottom portion of the side walls is formed in an electrode layer of the multi-layered substrate and at least one intermediate portion of the side walls is formed in an insulating layer of the multi-layered substrate.

4. A fluidic device according to any of the previous claims, wherein for each of the side walls of the channel there is alternatingly at least an electrically conducting portion, an electrically insulating portion and a further electrically conducting portion.

5. A fluidic device according to any of the previous claims, wherein the electrically conducting portions in the side walls are symmetric with respect to a symmetry axis in the channel.

6. A fluidic device according to any of the previous claims, wherein there is a plurality of alternating electrode and insulating portions along each of the side walls.

7. A fluidic device according to any of the previous claims, wherein the sidewalls of the channel are covered by a thin electrically insulating layer.

8. A fluidic device according to any of the previous claims, wherein the channel furthermore comprise a top wall or a transparent top wall.

9. A fluidic device according to claim 8, wherein the channel comprises a plurality of pillars.

10. A fluidic device according to any of the previous claims, the device comprising a plurality of channels, wherein for each channel, the channel comprises along at least one of its side walls, alternatingly at least an electrically conducting portion, an electrically insulating portion and a further electrically conducting portion formed respectively by an electrically conducting, an electrically insulating and electrically conducting layer of the multi-layered substrate.

11. A fluidic device according to any of the previous claims, wherein the electrode configuration provides an electric field distribution having a maximum substantially at half of the depth of the channel.

12. A fluidic system comprising a fluidic device according to any of the previous claims, the fluidic system being any of a mixing system, a separation system, a chemical production system or a biotechnological production system.

13. A fluidic system according to the previous claim, wherein the fluidic system is an on-chip system.

14. Use of a fluidic device according to any of claims 1 to 11 for processing a fluid in a fluid flow in the process of separating components in a flow, in the process of production of chemical components, in the process of analysing components in a flow or in the process of production of biotechnological components.

15. A method for manufacturing a device according to any of claims 1 to 11, the method comprising
- obtaining a multi-layered substrate, the multi-layered substrate comprising at least an electrically conducting layer, an electrically insulating layer and an electrically conducting layer, and
- creating a channel into said multi-layered substrate, so as to form a 3D channel with side walls whereby along at least one of the side walls electrodes are formed by alternatingly at least an electrically conducting portion, an electrically insulating portion and a further electrically conducting portion.
